# FASCICULE DE BREVET EUROPEEN

(11) **EP 2 816 785 B1**
(45) Date de publication et mention de la délivrance du brevet: **22.11.2017**
(21) Numéro de dépôt: 14173130.7
(22) Date de dépôt: 19.06.2014
(51) Int. Cl.: H04M 1/02

(54) **Téléphone modulaire**
Modulares Telefon
Modular telephone

(30) Priorité: 19.06.2013 FR 1355798
(43) Date de publication de la demande: 24.12.2014
(73) Titulaire: Orange, 75015 Paris (FR)
(72) Inventeur: Mit, Frédéric, 75018 Paris (FR); Augui, Jérôme, 92190 Meudon (FR)
(74) Mandataire: Ameline, Jean-Paul B.C.

(56) Documents cités:
- FR-A1- 2 841 718
- US-A1- 2006 093 161
- US-A1- 2010 291 873
- US-A1- 2012 172 085

## Description

### DOMAINE TECHNIQUE GENERAL

La présente invention concerne un terminal de communication téléphonique.

### ETAT DE L'ART

Les anciens téléphones à cadran possédaient souvent un combiné supplémentaire, prenant la forme d'un boitier circulaire rangé à l'arrière du téléphone. Ce combiné permettait à une tierce personne d'écouter la conversation en cours.

Aujourd'hui, ces haut-parleurs ne sont plus présents sur les téléphones numériques sans fil qui ont remplacé les téléphones à cadran.

A la place, on trouve généralement un haut-parleur sur la base du téléphone, permettant, lorsqu'il est activé, à toutes les personnes à proximité d'entendre la conversation (mode « mains libres »).

Cela n'est pas souhaitable dans certains cas où la conversation doit rester privée entre un nombre réduit de personnes.

Alternativement, certains téléphones autorisent l'utilisation d'un deuxième combiné, qui peut être configuré pour permettre une conversation comprenant un troisième interlocuteur à proximité de l'appelant ou de l'appelé (lequel utilise le combiné principal).

Outre le fait qu'elle implique l'achat d'un combiné supplémentaire, cette solution nécessite la mise en oeuvre d'une procédure particulière dans la mesure où les différents combinés associés à une même base sont généralement configurés pour être utilisés alternativement, et non pas simultanément.

FR 2 841 718 et US2010/0291873 proposent des terminaux mobiles permettant à une tierce personne de participer à une conversation en cours.

L'invention vient améliorer la situation.

### PRESENTATION DE L'INVENTION

La présente invention se rapporte ainsi à un terminal de communication téléphonique, caractérisé en ce qu'il comprend une partie principale et une partie secondaire, chaque partie comprenant un microphone, un haut-parleur, une connectique, un module de communication à courte distance et un module de traitement de données connectés, les connectiques étant mutuellement engageables de sorte à connecter les parties principale et secondaire, le haut-parleur de la partie principale et le microphone de la partie secondaire étant commandés par les modules de traitement de données de sorte à être inactifs, ainsi que les modules de communication à courte distance, lorsque les connectiques sont engagées.

Le présent terminal est un dispositif modulaire « deux en un », séparable en deux parties, permettant chacune de remplir les fonctions d'un combiné indépendant.

La désactivation d'un haut-parleur et d'un microphone lorsque les deux parties sont réunies permet sont fonctionnement sous la forme d'un seul terminal quand la supplication n'est pas nécessaire.

Selon d'autres caractéristiques avantageuses et non limitatives :
- chaque partie comprend un module de communication à courte distance connecté au module de traitement de données de la partie pour connecter sans fil les parties principale et secondaire, les modules de communication à courte distance étant par les modules de traitement de données de sorte à être actifs lorsque les connectiques sont désengagées.
   Ces moyens de communication à courte distance permettent la communication entre les deux parties du terminal lorsqu'elles sont séparées ;
- les modules de communication à courte distance sont commandés par les modules de traitement de données de sorte à être inactifs lorsque les connectiques sont engagées.
   En utilisant au maximum la connexion via les connectiques et au minimum la connexion via les module de communication à courte portée, on préserve au mieux l'autonomie du terminal ;
- chaque module de traitement de données est configuré pour détecter un engagement ou un désengagement des connectiques, et mettre en oeuvre une désactivation ou une activation du haut-parleur de la partie principale et du microphone de la partie secondaire.
   La programmation d'un module de traitement de données est en effet une solution aisée pour gérer l'activation/désactivation des microphone et haut-parleur supplémentaires de façon simple et efficace ;
- les modules de traitement de données sont configurés pour dupliquer une conversation en cours avec un terminal distant lorsqu'un désengagement des connectiques est détecté, en :
   - Transmettant à chaque haut-parleur les données vocales reçues depuis le terminal distant ;
   - Transmettant au terminal distant les données vocales reçues depuis chaque microphone.
   Cette stratégie de duplication permet à deux personnes de suivre et participer à la même conversation avec un terminal distant, de façon simple et sans consommer particulièrement d'électricité ;
- la partie secondaire comprend un capteur de proximité avant, le haut-parleur de la partie secondaire étant commandé de sorte à augmenter le volume lorsque le capteur de proximité avant ne détecte pas de surface proche.
   Grâce à ce capteur, un mode main libre automatique est possible lorsque la partie supérieure séparée n'est pas contre l'oreille de l'utilisateur ;
- la partie secondaire comprend un capteur de proximité arrière et une caméra commandée de sorte à être active lorsque le capteur de proximité arrière détecte une surface proche.
   Ces composants additionnels permettent facilement de mettre en oeuvre des visioconférences via le terminal et une télévision ;
- la partie principale et la partie secondaire présentent des formes complémentaires de sorte à ce que le terminal présente une forme compacte lorsque les connectiques sont engagées.
   Ce choix de construction particulier rend le terminal très ergonomique même lorsque les parties ne sont pas détachées.

Selon un deuxième aspect, l'invention concerne un procédé de duplication d'une conversation téléphonique entre un terminal de communication téléphonique selon le premier aspect de l'invention et un terminal distant via un réseau, le procédé étant caractérisé en ce qu'il comprend des étapes de :
- Détection d'un désengagement des connectiques et activation des modules de communication à courte distance ;
- Activation du haut-parleur de la partie principale et du microphone de la partie secondaire ;
- Transmission à chaque haut-parleur des données vocales reçues depuis le terminal distant ;
- Transmission au terminal distant des données vocales reçues depuis chaque microphone.

La duplication automatique d'une conversation suite à la séparation du terminal rend le partage de conversation complètement automatique pour les utilisateurs, et très facilement utilisable même si la conversation à déjà commencé avec un seul combiné.

Selon un troisième aspect, l'invention concerne un produit programme d'ordinateur comprenant des instructions de code pour l'exécution d'un procédé selon le deuxième aspect de l'invention de duplication d'une conversation téléphonique entre un terminal de communication téléphonique et un terminal distant via un réseau.

Selon un quatrième aspect, l'invention concerne un moyen de stockage lisible par un équipement informatique sur lequel on trouve ce produit programme d'ordinateur.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 représente un mode de réalisation avantageux d'un terminal de communication téléphonique selon l'invention ;
- la figure 2a représente deux vues d'un mode de réalisation avantageux du terminal de communication téléphonique selon l'invention en position séparée ;
- la figure 2b représente un mode de réalisation avantageux du terminal de communication téléphonique selon l'invention en position engagée ;
- la figure 3 illustre une première utilisation du terminal de communication téléphonique selon l'invention en position séparée ;
- la figure 4 illustre une première utilisation du terminal de communication téléphonique selon l'invention en position séparée.

### DESCRIPTION DETAILLEE

### Architecture interne

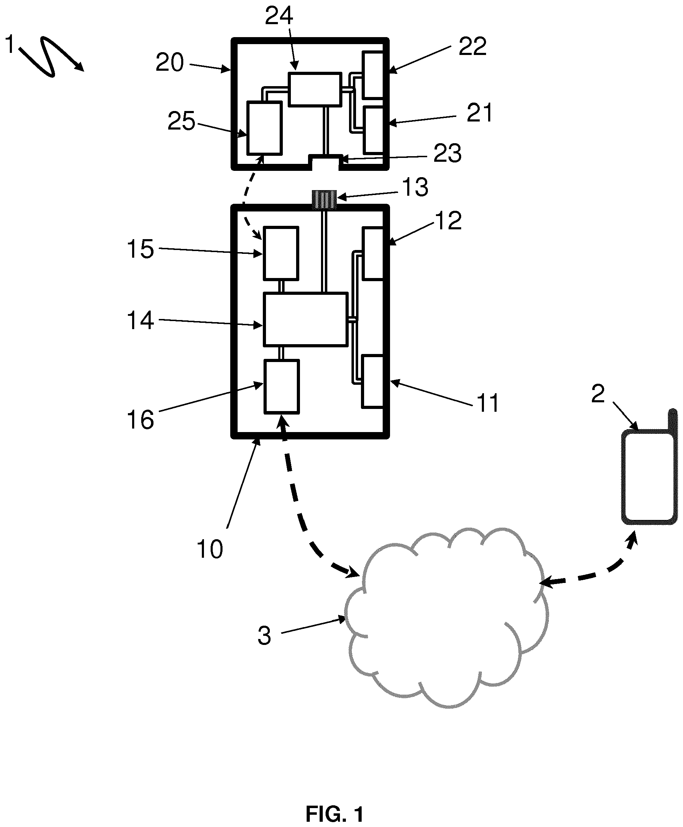

L'architecture du présent terminal de communication téléphonique 1 est illustrée par la **figure 1****.** Ce dernier est un téléphone qui comprend deux éléments : une partie principale 10 et une partie secondaire 20.

La partie principale 10 comprend tous les constituants d'un combiné de téléphone sans fil classique, et en particulier un module de traitement de données 14 (par exemple un processeur), un microphone 11, un haut-parleur 12, un module de communication sans fil 16, des moyens de saisie d'un numéro 17 tels qu'un clavier (voir plus loin). Peuvent également être trouvés un module d'affichage, un module de stockage de données (par exemple pour un répertoire), etc.

On comprendra que le terminal 1 peut être aussi bien utilisé avec une base (le module de communication sans fil 16 est adapté pour communiquer avec la base, et cette dernière est connectée en particulier filialement avec un réseau de communication 3) ou de façon autonome (le terminal 1 est alors par exemple un smartphone, le module de communication sans fil 16 comprenant une carte SIM et étant apte à se connecter à un réseau de téléphonie mobile 3).

Il est même envisageable qu'il n'y ait pas de module de communication sans fil 16 et que la partie principale 10 soit reliée filairement au réseau 3.

Ce qui fait la spécificité de l'invention est la présence d'une partie secondaire 20. Cette dernière duplique certaines fonctions de la partie principale 10, et ainsi la partie secondaire 20 comprend notamment ses propres microphone 21, haut-parleur 22, et module de traitement de données 24.

Chaque partie 10, 20 comprend une connectique 13, 23 pouvant être engagée avec l'autre (par exemple, la connectique 23 de la partie secondaire 20 est une connectique femelle complémentaire d'une connectique mâle 13 de la partie principale 10).

Chaque connectique 13, 23 est reliée au module de traitement de données 14, 24 de sa partie 10, 20, de sorte qu'une connexion entre les deux parties 10, 20 s'établisse lorsque les connectiques 13, 23 sont mutuellement engagées. Dans la mesure où le microphone 11, 21, au haut-parleur 12, 22, la connectique 13, 23 et le module de traitement de données 14, 24 de chaque partie 10, 20 sont connectés, cet engagement permet une interconnexion de tous les composants via les modules de traitement de données 14, 24. Comme l'on verra plus loin, il n'y a toutefois pas nécessairement échange de données via les connectiques 13, 23.

Le haut-parleur 12 de la partie principale 10 et le microphone 21 de la partie secondaire 20 sont commandés de sorte à être inactifs lorsque les connectiques 13, 23 sont engagées.

En d'autres termes, lorsque les connectiques 13, 23 sont engagées (i.e. les parties principale et secondaire 10, 20 sont assemblées), seuls le haut-parleur 22 de la partie secondaire 20 et le microphone 11 de la partie principale 10 sont actifs. Le terminal 1 forme alors un combiné assemblé comprenant un haut-parleur et un microphone fonctionnel, de façon similaire à n'importe quel combiné.

Lorsque l'on désengage les deux parties 10, 20, tous les microphones 11, 21 et tous les haut-parleurs 12, 22 deviennent fonctionnels, et ainsi chaque partie 10, 20 présente alors un couple microphone/haut-parleur fonctionnel, et peut opérer en tant que combiné autonome. Le terminal 1 est ainsi un téléphone modulaire.

Ce sont les modules de traitement de données 14, 24 qui gèrent l'activation/inactivation du haut-parleur 12 et du microphone 21 supplémentaires. En particulier, chaque module de traitement de données 14, 24 est configuré pour détecter un engagement ou un désengagement des connectiques 13, 23, et mettre en oeuvre une désactivation ou une activation du haut-parleur 12 de la partie principale 10 et du microphone 21 de la partie secondaire 20 :
- lorsque un désengagement des connectiques 14, 24 est détecté, le module de traitement de données 14 de la partie principale 10 active le haut-parleur 12, et le module de traitement de données 24 de la partie secondaire 20 active le microphone 21 ;
- lorsque un engagement des connectiques 14, 24 est détecté, le module de traitement de données 14 de la partie principale 10 désactive le haut-parleur 12, et le module de traitement de données 24 de la partie secondaire 20 désactive le microphone 21.

Comme l'on voit toujours sur la figure 1, chaque partie 10, 20 comprend avantageusement un module de communication à courte distance 15, 25, ces derniers étant activés de sorte à connecter sans fil les parties principale et secondaire 10, 20 lorsque les connectiques 13, 23 sont désengagées. Il s'agit par exemple d'un module Bluetooth, WiFi, etc.

De façon préférée, chaque module de communication à courte distance 15, 25 d'une partie 10, 20 est connecté au module de traitement de données 14, 24 de la partie 10, 20, leur activation/désactivation étant gérée par ces derniers de façon similaire à celles du haut-parleur 12 et du microphone 21 supplémentaires :
- lorsque un désengagement des connectiques 14, 24 est détecté, le module de traitement de données 14 de la partie principale 10 active le module de communication à courte distance 15, et le module de traitement de données 24 de la partie secondaire 20 active le module de communication à courte distance 25 ;
- lorsque un engagement des connectiques 14, 24 est détecté, le module de traitement de données 14 de la partie principale 10 désactive le module de communication à courte distance 15, et le module de traitement de données 24 de la partie secondaire 20 désactive le module de communication à courte distance 25.

Cela permet de n'activer les modules de communication 15, 25 que lorsqu'il n'est plus possible d'envoyer des données via les connectiques 13, 23. Alternativement, on comprendra qu'il est possible que les modules de communication à courte distance 15, 25 soient toujours activés, les connectiques 13, 23 servant par exemple uniquement d'alimentation électrique (chaque partie 10, 20 comprend une batterie pour l'alimentation des composants). Toutefois, il reste préféré d'utiliser au maximum les connectiques 13, 23 pour échanger des données, et de n'activer les modules de communication à courte portée qu'en cas de séparation des parties 10, 20 de sorte à minimiser la consommation électrique.

### Architecture externe

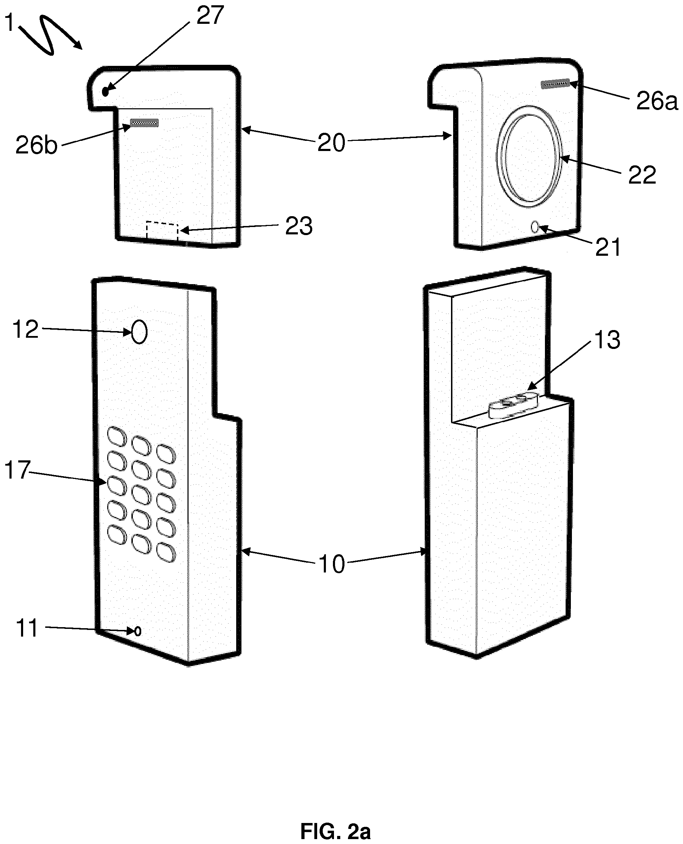

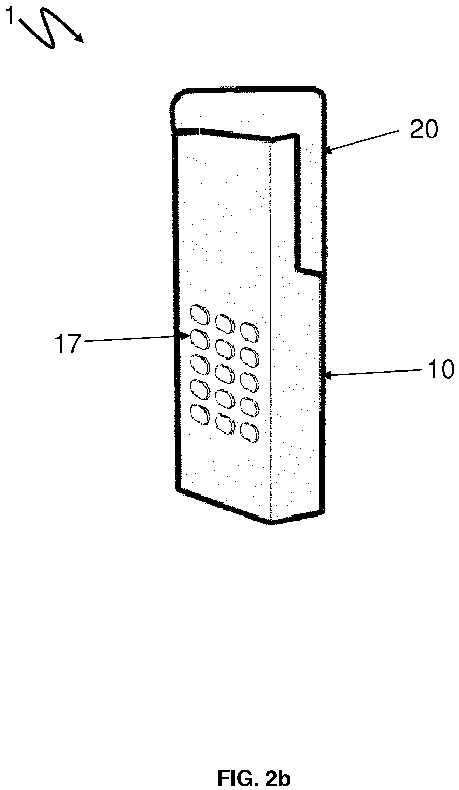

La **figure 2a** illustre le présent terminal 1 lorsque les deux parties 10, 20 sont séparées. Comme l'on voit, chaque partie 10, 20 a une forme proche d'un « L ». La séparation entre les deux parties 10, 20 forme un «Z» (voir également **figure 2b****,** dans lequel les deux parties sont assemblées), la partie secondaire 20 se détachant grâce à une translation selon une direction proche de celle de la barre centrale du « Z ».

De façon générale, il est souhaitable que la partie principale 10 et la partie secondaire 20 présentent des formes complémentaires de sorte à ce que le terminal 1 présente une forme compacte lorsque les connectiques 13, 23 sont engagées (par compacte, en entend du volume classique d'un téléphone (avantageusement sensiblement parallélépipédique), et en particulier prenant une place réduite par rapport à celle occupée par les deux parties 10, 20 prises séparées).

On note sur les figures 2a-2b que le terminal 1 présente une première face (exposant en particulier les microphone 21 et haut-parleur 22 de la partie secondaire), et une deuxième face (exposant en particulier un clavier 17 pour composer un numéro de téléphone. Le microphone 11 de la partie principale 10 est situé tout en bas du terminal 1 (sur la deuxième face, voire en dessous du terminal). Dans une telle configuration, la première face est appliquée contre l'oreille lorsque le terminal 1 est utilisé assemblé.

On comprendra toutefois que le présent terminal 1 n'est limité à aucun design en particulier, et que l'homme du métier saura adapter l'invention à de nombreux modèles.

### Partage d'appel

Comme expliqué précédemment, le présent terminal 1 permet de faire une conversation à trois entre un utilisateur de la partie principale 10, un utilisateur de la partie secondaire 20, et un utilisateur d'un terminal distant 2.

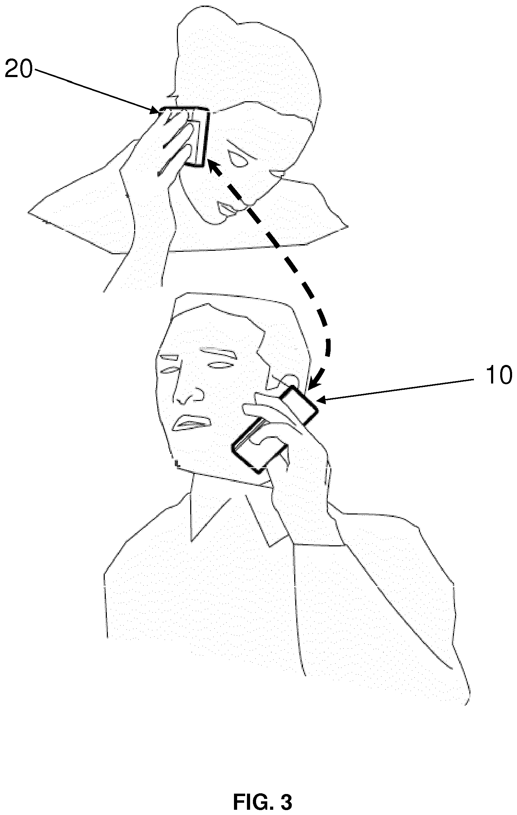

L'idée est de dupliquer la conversation au niveau du terminal 1, en partant de l'hypothèse que les utilisateurs respectifs des parties principale et secondaire 10, 20 sont à proximité (et donc s'entendent), de sorte que la connexion entre les modules de traitement de données 14, 24 via les modules de communication à courte distance 15, 25 soit établie (situation représentée par la **figure 3**).

Chacun des deux utilisateurs entend (via le haut-parleur 12 ou le hautparleur 22 le son provenant du terminal distant 2) le son provenant du terminal distant 2, et chacun peut parler via son microphone 11, 21.

Les modules de traitement de données 14, 24 sont pour cela configurés pour dupliquer la conversation en cours lorsqu'un désengagement des connectiques 13, 23 est détecté, en :
- Transmettant à chaque haut-parleur 12, 22 les données vocales reçues depuis le terminal distant 2,
- Transmettant au terminal distant 2 les données vocales reçues depuis chaque microphone 11, 21.

Il est en outre possible que les modules de traitement de données 14, 24 soient également configurés pour transmettre au haut-parleur 12 de la partie principale 10 les données vocales reçues depuis le microphone 21 de la partie secondaire 20, et transmettre au haut-parleur 22 de la partie secondaire 20 les données vocales reçues depuis le microphone 11 de la partie principale 10 (cela n'est toutefois pas nécessaire dans la mesure ou chacun des deux utilisateurs du terminal 1 entend à voix haute ce que dit l'autre).

Selon un deuxième aspect, est proposé le procédé de duplication d'une conversation téléphonique entre le terminal 1 tel que décrit précédemment et un terminal distant 2 via un réseau 3. Il comprend les étapes de :
- Détection d'un désengagement des connectiques 13, 23 et activation des modules de communication de courte distance 15, 25 ;
- Activation du haut-parleur 12 de la partie principale 10 et du microphone 21 de la partie secondaire 20 ;
- Transmission à chaque haut-parleur 12, 22 des données vocales reçues depuis le terminal distant 2 ;
- Transmission au terminal distant 2 des données vocales reçues depuis chaque microphone 11, 21.

Suite à l'activation du haut-parleur 12 de la partie principale 10 et du microphone 21 de la partie secondaire 20, ce procédé peut comme expliqué précédemment comprendre l'activation des modules de communication à courte distance 15, 25.

### Mode mains libres

Sur la figure 2a, on observe la possible présence sur la face avant de la partie secondaire 20 un capteur 26a. Il s'agit d'un capteur de proximité avant, élément connu et très répandu sur les téléphones mobiles sans clapet (en d'autres termes dont l'écran est constamment à nu). Il permet de façon générale de détecter si le téléphone est contre l'oreille de l'utilisateur (en d'autres termes si ce dernier est en conversation) de sorte à pouvoir désactiver l'affichage pour économiser de la batterie.

Dans le présent terminal 1, le capteur de proximité avant 26a peut avoir ce rôle lorsque les deux parties 10, 20 sont assemblées, mais surtout il peut en avoir un autre lorsque les parties 10, 20 sont séparées.

Ainsi, le haut-parleur 22 de la partie secondaire 20 est avantageusement commandé (par le module de traitement de données 24 de la partie secondaire 20) de sorte à augmenter le volume lorsque le capteur de proximité avant 26a ne détecte pas de surface proche.

En effet, si ce capteur 26a ne détecte pas de surface proche, c'est que la partie secondaire 20 (voire tout le terminal 1 s'il est assemblé) n'est pas portée à l'oreille (comme l'on voit sur la figure 3), mais qu'elle est par exemple posée sur une table, ou portée sur un vêtement (possibilité de prévoir par exemple une pince sous le rebord arrière visible à la figure 2a).

La partie secondaire 20 passe alors en mode « mains libres » (ce que l'on appelle communément « sur haut-parleur »), dans lequel le volume est suffisamment fort pour être entendu par une ou plusieurs personnes à un ou deux mètres du combiné. La sensibilité du microphone 21 peut être démultipliée pour permettre à plusieurs personnes parlant à voix normale d'être entendues.

Cela est à nouveau géré par le module de traitement de données 24 de la partie secondaire 20. On notera qu'il est possible de conditionner ce passage en mode mains libre au désengagement des connectiques 13, 23 (i.e. la séparation des parties 10, 20)

### Mode communication vidéo

Toujours sur la figure 2a, on observe plusieurs composants sur la face arrière de la partie secondaire 20 : un capteur de proximité arrière 26b (similaire au capteur de proximité avant 26a, et en remplacement ou complément de ce dernier), et une caméra 27 (on connait des caméras d'à peine 2 mm de diamètre pour téléphones mobiles).

La caméra 27 est préférentiellement commandée de sorte à être activée automatiquement (en particulier par le module de traitement de données 24) lorsque le capteur de proximité arrière 26b détecte une surface proche (et bien entendu dans le cas où les parties 10, 20 sont détachées, puisqu'en position réunie ce capteur 26b est en permanence contre la partie principale 10).

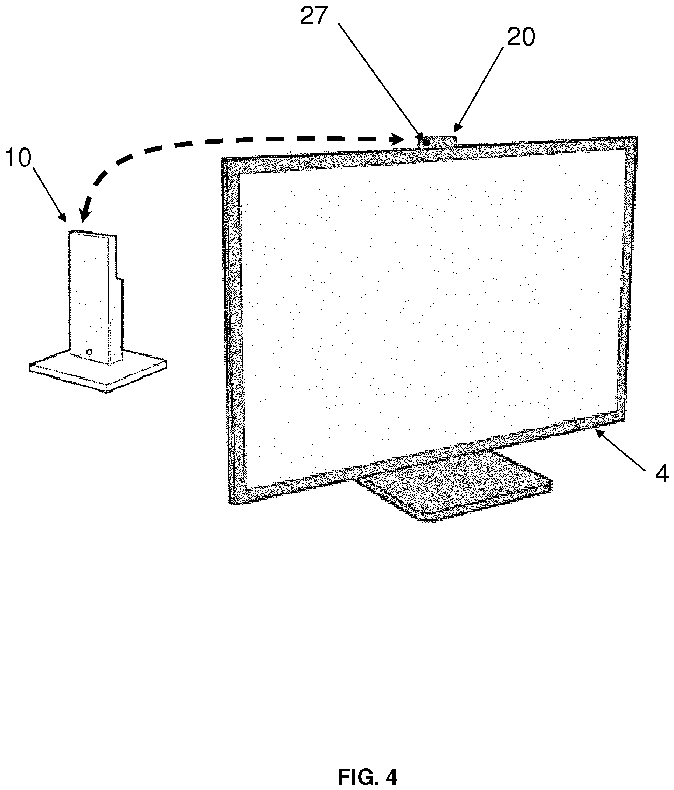

Cela permet par exemple comme l'on voit sur la **figure 4** de poser la partie secondaire 20 sur le haut d'une télévision 4, de sorte que la caméra 27 activée soit dirigée vers l'utilisateur disposé devant la télévision 4, et le son émis par la partie secondaire 20 dirigé vers l'arrière de la télévision 4 (comme c'est le plus souvent le cas pour les haut-parleurs intégrés d'une télévision). En effet, le capteur de proximité avant 26a ne détecte aucune surface proche, le mode mains libre est donc actif. La partie secondaire devient ainsi une caméra déportée sans fil.

Cette configuration permet facilement une visioconférence : à condition que la télévision soit connectée au réseau 3 et affiche l'image envoyée par l'autre interlocuteur, la partie secondaire 20 offre directement les trois autres fonctions permettant la visioconférence (microphone 21, haut-parleur 22 et caméra 27).

### Produit programme d'ordinateur

Selon un troisième et un quatrième aspects, l'invention concerne un produit programme d'ordinateur comprenant des instructions de code pour l'exécution (en particulier sur les modules de traitement de données 14, 24 des deux parties 10, 20) d'un procédé selon le deuxième aspect de l'invention de duplication d'une conversation téléphonique entre le terminal 1 et un terminal distant 2 via un réseau 3, ainsi que des moyens de stockage lisibles par un équipement informatique (par exemple un module de stockage de données du terminal 1) sur lequel on trouve ce produit programme d'ordinateur.

## Revendications

1. Terminal de communication téléphonique (1), comprenant une partie principale (10) et une partie secondaire (20), chaque partie (10, 20) comprenant un microphone (11, 21), un haut-parleur (12, 22), une connectique (13, 23), un module de communication à courte distance (15, 25) et un module de traitement de données (14, 24) connectés, les connectiques (13, 23) étant mutuellement engageables de sorte à interconnecter les parties principale et secondaire (10, 20), **caractérisé en ce que** le haut-parleur (12) de la partie principale (10) et le microphone (21) de la partie secondaire (20) sont commandés par les modules de traitement de données (14, 24) de sorte à être inactifs, ainsi que les modules de communication à courte distance (15, 25), lorsque les connectiques (13, 23) sont engagées.

2. Terminal selon la revendications 1, dans lequel chaque partie comprend un module de communication à courte distance (15, 25) connecté au module de traitement de données (14, 24) de la partie (10, 20) pour connecter sans fil les parties principale et secondaire (10, 20), les modules de communication à courte distance (15, 25) étant commandés par les modules de traitement de données (14, 24) de sorte à être actifs lorsque les connectiques (13, 23) sont désengagées.

3. Terminal selon l'une des revendications 1 à 2, dans lequel chaque module de traitement de données (14, 24) est configuré pour détecter un engagement ou un désengagement des connectiques (13, 23), et mettre en oeuvre une désactivation ou une activation du haut-parleur (12) de la partie principale (10) et du microphone (21) de la partie secondaire (20).

4. Terminal selon la revendication 3, dans lequel les modules de traitement de données (14, 24) sont configurés pour dupliquer une conversation en cours avec un terminal distant (2) lorsqu'un désengagement des connectiques (13, 23) est détecté, en :
- Transmettant à chaque haut-parleur (12, 22) les données vocales reçues depuis le terminal distant (2) ;
- Transmettant au terminal distant (2) les données vocales reçues depuis chaque microphone (11, 21).

5. Terminal selon l'une des revendications 1 à 4, dans lequel la partie secondaire (20) comprend un capteur de proximité avant (26a), le haut-parleur (22) de la partie secondaire (20) étant commandé de sorte à augmenter le volume lorsque le capteur de proximité avant (26a) ne détecte pas de surface proche.

6. Terminal selon l'une des revendications 1 à 5, dans lequel la partie secondaire (20) comprend un capteur de proximité arrière (26b) et une caméra (27) commandée de sorte à être active lorsque le capteur de proximité arrière (26b) détecte une surface proche.

7. Terminal selon l'une des revendications 1 à 6, dans lequel la partie principale (10) et la partie secondaire (20) présentent des formes complémentaires de sorte à ce que le terminal (1) présente une forme compacte lorsque les connectiques (13, 23) sont engagées.

8. Procédé de duplication d'une conversation téléphonique entre un terminal de communication téléphonique (1) selon l'une des revendications précédentes et un terminal distant (2) via un réseau (3), le procédé étant **caractérisé en ce qu'**il comprend des étapes de :
- Détection d'un engagement des connectiques (13, 23) et désactivation des modules de communication à courte distance (15, 25) ;
- Désactivation du haut-parleur (12) de la partie principale (10) et du microphone (21) de la partie secondaire (20) ;
- Transmission au haut-parleur (22) de la partie secondaire des données vocales reçues depuis le terminal distant (2) ;
- Transmission au terminal distant (2) des données vocales reçues depuis le microphone (11) de la partie principale.

9. Produit programme d'ordinateur comprenant des instructions de code pour l'exécution d'un procédé selon la revendication 8 de duplication d'une conversation téléphonique entre un terminal de communication téléphonique (1) et un terminal distant (2) via un réseau (3).

10. Moyen de stockage lisible par un équipement informatique sur lequel un produit programme d'ordinateur comprend des instructions de code pour l'exécution d'un procédé selon la revendication 8 de duplication d'une conversation téléphonique entre un terminal de communication téléphonique (1) et un terminal distant (2) via un réseau (3).

## Patentansprüche

1. Telefonkommunikationsendgerät (1) mit einem Hauptteil (10) und einem Nebenteil (20), wobei jedes Teil (10, 20) ein Mikrofon (11, 21), einen Lautsprecher (12, 22), einen Anschluss (13, 23), ein Kurzdistanz-Kommunikationsmodul (15, 25) und ein Datenverarbeitungsmodul (14, 24) umfasst, die verbunden sind, wobei die Anschlüsse (13, 23) gegenseitig steckbar sind, so dass sie das Haupt- und das Nebenteil (10, 20) zusammenschalten, **dadurch gekennzeichnet, dass** der Lautsprecher (12) des Hauptteils (10) und das Mikrofon (21) des Nebenteils (20) durch die Datenverarbeitungsmodule (14, 24) so gesteuert werden, dass sie sowie die Kurzdistanz-Kommunikationsmodule (15, 25) inaktiv sind, wenn die Anschlüsse (13, 23) eingesteckt sind.

2. Endgerät nach Anspruch 1, wobei jedes Teil ein Kurzdistanz-Kommunikationsmodul (15, 25) umfasst, das mit dem Datenverarbeitungsmodul (14, 24) des Teils (10, 20) verbunden ist, um das Haupt- und das Nebenteil (10, 20) drahtlos zu verbinden, wobei die Kurzdistanz-Kommunikationsmodule (15, 25) durch die Datenverarbeitungsmodule (14, 24) so gesteuert werden, dass sie aktiv sind, wenn die Anschlüsse (13, 23) abgesteckt sind.

3. Endgerät nach einem der Ansprüche 1 bis 2, wobei jedes Datenverarbeitungsmodul (14, 24) so konfiguriert ist, dass es ein Einstecken oder ein Abstecken der Anschlüsse (13, 23) erkennt und eine Deaktivierung oder eine Aktivierung des Lautsprechers (12) des Hauptteils (10) und des Mikrofons (21) des Nebenteils (20) ausführt.

4. Endgerät nach Anspruch 3, wobei die Datenverarbeitungsmodule (14, 24) so konfiguriert sind, dass sie ein laufendes Gespräch mit einem entfernten Endgerät (2) duplizieren, wenn ein Abstecken der Anschlüsse (13, 23) erkannt wird, indem sie:
- zu jedem Lautsprecher (12, 22) die vom entfernten Endgerät (2) empfangenen Sprachdaten übertragen;
- zum entfernten Endgerät (2) die von jedem Mikrofon (11, 21) empfangenen Sprachdaten übertragen.

5. Endgerät nach einem der Ansprüche 1 bis 4, wobei das Nebenteil (20) einen vorderen Näherungssensor (26a) umfasst, wobei der Lautsprecher (22) des Nebenteils (20) so gesteuert wird, dass die Lautstärke erhöht wird, wenn der vordere Näherungssensor (26a) keine Oberfläche in der Nähe erkennt.

6. Endgerät nach einem der Ansprüche 1 bis 5, wobei das Nebenteil (20) einen hinteren Näherungssensor (26b) und eine Kamera (27) umfasst, die so gesteuert wird, dass sie aktiviert wird, wenn der hintere Näherungssensor (26b) eine Oberfläche in der Nähe erkennt.

7. Endgerät nach einem der Ansprüche 1 bis 6, wobei das Hauptteil (10) und das Nebenteil (20) komplementär ausgebildete Formen aufweisen, so dass das Endgerät (1) eine kompakte Form aufweist, wenn die Anschlüsse (13, 23) eingesteckt sind.

8. Verfahren zum Duplizieren eines Telefongesprächs zwischen einem Telefonkommunikationsendgerät (1) nach einem der vorhergehenden Ansprüche und einem entfernten Endgerät (2) über ein Netz (3), wobei das Verfahren **dadurch gekennzeichnet ist, dass** es die folgenden Schritte umfasst:
- Erkennen eines Einsteckens der Anschlüsse (13, 23) und Deaktivieren der Kurzdistanz-Kommunikationsmodule (15, 25);
- Deaktivieren des Lautsprechers (12) des Hauptteils (10) und des Mikrofons (21) des Nebenteils (20);
- Übertragen der vom entfernten Endgerät (2) empfangenen Sprachdaten zum Lautsprecher (22) des Nebenteils;
- Übertragen der vom Mikrofon (11) des Hauptteils empfangenen Sprachdaten zum entfernten Endgerät (2).

9. Computerprogrammprodukt mit Codeanweisungen zum Ausführen eines Verfahrens nach Anspruch 8 zum Duplizieren eines Telefongesprächs zwischen einem Telefonkommunikationsendgerät (1) und einem entfernten Endgerät (2) über ein Netz (3).

10. Speichermedium, das von einem IT-Gerät gelesen werden kann, auf dem ein Computerprogrammprodukt Codeanweisungen zum Ausführen eines Verfahrens nach Anspruch 8 zum Duplizieren eines Telefongesprächs zwischen einem Telefonkommunikationsendgerät (1) und einem entfernten Endgerät (2) über ein Netz (3) umfasst.

## Claims

1. Telephone communication terminal (1), comprising a main part (10) and a secondary part (20), each part (10, 20) comprising a microphone (11, 21), a loudspeaker (12, 22), a connector (13, 23), a short-range communication module (15, 25) and a data processing module (14, 24) that are connected, the connectors (13, 23) being able to engage with one another so as to interconnect the main and secondary parts (10, 20), **characterized in that**
the loudspeaker (12) of the main part (10) and the microphone (21) of the secondary part (20) are controlled by the data processing modules (14, 24) so as to be inactive, along with the short-range communication modules (15, 25), when the connectors (13, 23) are engaged.

2. Terminal according to Claim 1, wherein each part comprises a short-range communication module (15, 25) connected to the data processing module (14, 24) of the part (10, 20) in order to wirelessly connect the main and secondary parts (10, 20), the short-range communication modules (15, 25) being controlled by the data processing modules (14, 24) so as to be active when the connectors (13, 23) are disengaged.

3. Terminal according to either of Claims 1 and 2, wherein each data processing module (14, 24) is configured to detect an engagement or a disengagement of the connectors (13, 23), and to implement a deactivation or an activation of the loudspeaker (12) of the main part (10) and of the microphone (21) of the secondary part (20).

4. Terminal according to Claim 3, wherein the data processing modules (14, 24) are configured to duplicate an ongoing conversation with a remote terminal (2) when a disengagement of the connectors (13, 23) is detected, by:
- transmitting the voice data received from the remote terminal (2) to each loudspeaker (12, 22);
- transmitting the voice data received from each microphone (11, 21) to the remote terminal (2).

5. Terminal according to one of Claims 1 to 4, wherein the secondary part (20) comprises a front proximity sensor (26a), the loudspeaker (22) of the secondary part (20) being controlled so as to increase the volume when the front proximity sensor (26a) does not detect a nearby surface.

6. Terminal according to one of Claims 1 to 5, wherein the secondary part (20) comprises a rear proximity sensor (26b) and a camera (27) that is controlled so as to be active when the rear proximity sensor (26b) detects a nearby surface.

7. Terminal according to one of Claims 1 to 6, wherein the main part (10) and the secondary part (20) have complementary shapes, such that the terminal (1) has a compact form when the connectors (13, 23) are engaged.

8. Method for duplicating a telephone conversation between a telephone communication terminal (1) according to one of the preceding claims and a remote terminal (2) via a network (3), the method being **characterized in that** it comprises steps of:
- detecting an engagement of the connectors (13, 23) and deactivating the short-range communication modules (15, 25) ;
- deactivating the loudspeaker (12) of the main part (10) and the microphone (21) of the secondary part (20) ;
- transmitting the voice data received from the remote terminal (2) to the loudspeaker (22) of the secondary part;
- transmitting the voice data received from the microphone (11) of the main part to the remote terminal (2) .

9. Computer program product comprising code instructions for executing a method according to Claim 8 for duplicating a telephone conversation between a telephone communication terminal (1) and a remote terminal (2) via a network (3).

10. Storage medium able to be read by an item of computer equipment on which a computer program product comprises code instructions for executing a method according to Claim 8 for duplicating a telephone conversation between a telephone communication terminal (1) and a remote terminal (2) via a network (3).
